(19) Europäisches Patentamt
European Patent Office
Office européen des brevets

(11) Publication number: **0 427 338 A1**

(12) **EUROPEAN PATENT APPLICATION**

(21) Application number: **90202923.0**

(22) Date of filing: **05.11.90**

(51) Int. Cl.[5]: **B01D 61/00**, B01D 71/70, B01D 69/12, C10G 31/11

(30) Priority: **10.11.89 GB 8925477**

(43) Date of publication of application: **15.05.91 Bulletin 91/20**

(84) Designated Contracting States: **AT BE CH DE FR GB IT LI NL SE**

(71) Applicant: **SHELL INTERNATIONALE RESEARCH MAATSCHAPPIJ B.V.**
**Carel van Bylandtlaan 30**
**NL-2596 HR Den Haag(NL)**

(72) Inventor: **Rijkens, Hendrik Cornelis**
**Badhuiweg 3**
**NL-1031 CM Amsterdam(NL)**
Inventor: **Werner, Jan**
**Badhuiweg 3**
**NL-1031 CM Amsterdam(NL)**

(74) Representative: **Aalbers, Onno et al**
**P.O. Box 302**
**NL-2501 CH The Hague(NL)**

(54) **Process for the separation of solvents from hydrocarbons dissolved in said solvents.**

(57) A process for the separation of solvents from hydrocarbons dissolved in said solvents wherein a feed solution comprising hydrocarbons dissolved in an aromatic solvent and a polar aliphatic solvent is contacted at elevated pressure with one side of a dense, supported, plasma treated membrane which is substantially impermeable to said hydrocarbons. The membrane comprises a dense, selective layer of a fluorosilicone compound and a porous supporting layer. The solvents are recovered from the other side of the said plasma treated membrane.

EP 0 427 338 A1

Xerox Copy Centre

# PROCESS FOR THE SEPARATION OF SOLVENTS FROM HYDROCARBONS DISSOLVED IN SAID SOLVENTS

The invention relates to a process for the separation of solvents from hydrocarbons dissolved in said solvents and to supported membranes suitable for use in said process.

It has been known for many years to separate various hydrocarbon compounds from feed solutions comprising said compounds and a solvent by contacting such a feed solution with one side of a membrane and recovering one or more hydrocarbon compounds and in some cases solvent from the other (permeate) side of the membrane.

It is also known to increase the rate of permeation of organic compounds through particular elastomeric membranes by applying a solvent in the feed solution which cause said membranes to swell to such an extent that (polymeric) organic compounds having relatively high molecular weights (e.g. above 1000) will permeate together with the solvent though relatively thick (in order of millimetres) barrier membranes.

However, according to the above-mentioned known processes solvent is not separated as such; hydrocarbons remain present in the solvent either at the permeate side of the applied membrane or at the feed side when said membrane is impermeable for the solvent.

Further, it is known from EP-A-0220753 that a particular combination of solvents i.e. an aromatic solvent together with a polar aliphatic solvent can be separated with a good selectivity from hydrocarbons (e.g. oil fractions) dissolved therein by applying a dense (substantially hole-free) membrane which is substantially impermeable to said hydrocarbons and which membrane comprises a layer of a halogen-substituted silicone compound as defined hereinafter.

EP-0220753 discloses a process for the separation of solvents from hydrocarbons dissolved in said solvents wherein a feed solution comprising hydrocarbons dissolved in an aromatic solvent and a polar aliphatic solvent is contacted at elevated pressure with one side of a dense membrane which is substantially impermeable to said hydrocarbons and which membrane comprises a layer of a halogen-substituted silicone compound comprising units according to the general formula:

$$\begin{array}{c} R_2 \\ | \\ -Si-O- \\ | \\ R_1 \end{array}$$

wherein $R_1$ and $R_2$ represent moieties chosen from the group consisting of hydrogen, halogen, alkyl, aryl, aralkyl and halogen-substituted alkyl, aryl and aralkyl moieties, and said solvents are recovered from the other side of the membrane.

It appears that contact with a polar aliphatic solvent as such can cause a halogen-substituted silicone-comprising membrane to swell excessively (e.g. by hundreds of vol.%, compared with solvent-free membrane material), leading to an unacceptably low selectivity (α) defined as:

$$\alpha = \left(\frac{Y}{X}\right)_{solvent} \times \left(\frac{X}{Y}\right)_{oil}$$

wherein X = concentration in the feed solution and Y = concentration in the permeate (recovered at the "other side" of the membrane). However, in the presence of a feed solution comprising, in addition to hydrocarbons and a polar aliphatic solvent, an aromatic solvent the membrane layer as defined hereinbefore will swell to such an extent that both a good selectivity as well as a high solvent flux through the membrane can be attained.

In order to show the above-mentioned desirable characteristics in the solvent separation process it is required that the membrane comprises halogen moieties i.e. in the formula which represents the units present in the silicone compound at least one of $R_1$ and $R_2$ comprises halogen as such or in the form of a halogen-substituted alkyl, aryl or aralkyl moiety; a halogen-substituted alkyl moiety is preferred in this context, in particular a 3,3,3-trihalogen propyl moiety (represented by $R_1$ in said formula). Most preferably

the membrane applied in the process comprises fluorine-substituted moieties such as 3,3,3-trifluoropropyl. $R_2$ preferably represents a methyl moiety.

The membrane suitably comprises the halogen-substituted silicone compound as described hereinbefore in the form of a cross-linked homopolymer; however, a copolymer of said silicone compound and an elastomeric prepolymer (e.g. an organopolysiloxane compound) may be used instead. The membrane layer which comprises said halogen-substituted silicone compound suitably has a thickness from 0.1-100 µm in order to attain relatively high permeate fluxes when said membranes are applied in solvent separation processes.

The use of reinforcing filler in the membrane layer comprising the silicone compound is preferably avoided because of the negative influence on the permeability of the membrane layer. A membrane with adequate strength for the present purpose can be obtained by supporting the silicone layer by means of a porous support which may comprise a layer of any suitable material, such as cloth, wire net or glass fibres; a porous polypropylene supporting layer is preferred. Said polypropylene supporting layer suitably has a thickness from 10-500 µm, preferably from 15-100 µm. In some cases it may be advantageous to apply at least one extra layer between a dense, selective silicone-comprising layer and a porous support. This intermediate layer is suitably a dense, highly permeable layer with a good bonding capacity for both the silicone-comprising layer and the support.

Dense membrane layers comprising a halogen-substituted silicone compound suitable for use in the solvent separation process may be prepared by any method known in the art. A suitable method is solvent casting which involves forming a solution of a polymer or a prepolymer of the desired membrane compound is a solvent (to which a surface active agent is usually added) and casting the solution onto a liquid support to produce a thin layer which is subsequently dried (by evaporation of the solvent present in the (pre) polymer solution). The applied solvent is generally substantially immiscible in the liquid support in order to avoid a reduction of the surface tension of the liquid support which could lead to instability of the developing membrane and possible generation of holes therein.

However, the above-mentioned dense membranes are preferably prepared by means of a particular form of solvent casting wherein a solvent is applied which is more or less soluble in a polar liquid support (e.g. water), thus shortening the membrane solidification time substantially because not all solvent has to be removed from the membrane-forming layer by means of evaporation. Furthermore, there appears to be no need for a surface active agent (such as a dispersant) in case a solution is used which comprises a prepolymer of a halogen-substituted silicone compound and a ketone. It is possible to use a liquid support in which a small amount of the solvent used is already present before the solution which comprises the solvent is spread out and allowed to desolvate. A previous requirement for continuous refreshing of (part of) the liquid support (resulting in an uneven surface of the support) is thereby eliminated.

Water is a preferred supporting liquid, when used in combination with a prepolymer which can be cross-linked in the presence of water. Most preferably a prepolymer solution of 3,3,3-trifluoropropylmethyl siloxane in 3-heptanone is allowed to spread out over a water surface and form a cross-linked, dense membrane.

The known process is well suited for applications in which a feed solution comprising hydrocarbons dissolved in an aromatic solvent and a polar aliphatic solvent is available as such. This is the case when hydrocarbon oils have been subjected to a solvent dewaxing treatment during which a toluene/methyl ethyl ketone solvent mixture is added to a wax-containing oil, followed by removing wax (e.g. by means of filtration). The solvents are usually recovered from the dewaxed hydrocarbon oil in a conventional flashing process with high energy consumption. With the known process it is possible to reduce said energy consumption considerably by recovering a major portion of the solvents via membranes and separating only the remaining portion of solvents by conventional means.

As the process is essentially a reverse osmosis process in which the pressure applied at the side of the membrane which is in contact with the feed solution has to be higher than the pressure at the permeate side of the membrane, some energy is required to operate a feed pump when the feed solution is not available at the desired pressure. The pressure differential between both sides of the applied membrane is suitably from 2-100 bar.

The temperature at which the process is carried out may vary within a wide range and is not critical as long as the applied membranes can withstand the operating conditions. A feed solution temperature from -25 °C-100 °C is suitable in most cases whereas a temperature from -20 °C-50 °C is preferred when solvents are to be recovered from dewaxed hydrocarbon oils.

The solvents: dissolved hydrocarbons weight ratio in the feed solution is suitably from 0.5-5. A solvents:hydrocarbons weight ratio of less than 0.5 usually has a negative influence on the performance of the applied membranes i.e. the solvent flux through the membrane becomes undesirably low.

Because of the above-mentioned influence of the solvents:hydrocarbons weight ratio in the feed solution on the solvents flux it is preferred to carry out the process with a number of membrane units in a series-flow set-up, thus increasing the oil-content of the feed solution gradually in subsequent membrane units and maintaining a relatively high solvents ratio in the upstream membrane units. This way the total required membrane area can be reduced in comparison with a single-stage membrane separation process for a given quantity of feed solution to be treated. In order to avoid, or at least reduce fouling and concentration polarization of the membranes, the feed solution is preferably passed along one side of a membrane with a sufficiently high velocity and subsequently passed along one side of at least one following membrane.

In order to prevent concentration polarization even better, part of the feed solution which has been passed along one side of a membrane is preferably recirculated by reintroducing said part into the feed solution to be passed along said side of the same membrane.

Various types of membrane units may be applied, such as a flat sheet or a tubular membrane unit. However, such configurations require a relatively large amount of space because their packing density ($m^2$ membrane/$m^3$ apparatus) is low. Preference is given to the application of spirally wound - or hollow fibre -membranes which have a good pressure resistance and a high packing density.

However, it has been found that the selectivity of the known membranes, which are applied in solvent recovery in luboil dewaxing processes, is insufficient in many different fields and should be improved to obtain higher recovery results. It has surprisingly been found that the selectivity of the known membranes for solvent recovery can be improved tremendously by means of a plasma treatment.

It is an object of the invention to provide a process for the separation of solvents from hydrocarbons dissolved in said solvents wherein a membrane of improved selectivity is applied.

The invention therefore provides a process for the separation of solvents from hydrocarbons dissolved in said solvents wherein a feed solution comprising hydrocarbons dissolved in an aromatic solvent and a polar aliphatic solvent is contacted at elevated pressure with one side of a dense, supported membrane heated with a low temperature, low pressure plasma phase which is substantially impermeable to said hydrocarbons and which membrane comprises a dense, selective layer of a fluorosilicone compound and a porous supporting layer, and said solvents are recovered from the other side of the said plasma treated membrane.

The invention will now be described by way of example in more detail by reference to the Example.

EXAMPLE

Fluorosilicone membranes are a good candidate for bright stock/solvent separation in the dewaxing process. Bright stock is a heavy luboil distillation fraction. For the application of membranes in the solvent recovery process, however, the membrane should also be suitable for spindle oil/solvent separation. Spindle oil is the lightest luboil distillation fraction. The spindle oil content in the permeate must be less than 1 %w. A route to achieve this could be low temperature, low pressure plasma phase treatment which modifies the chemical structure of the fluorosilicone top layer.

The effect of such a treatment was already observed after a 10 minutes argon treatment of a fluorosilicone membrane. For a given process condition (25 °C, 40 bar pressure and equal weights of MEK, toluene and oil as feed mixture), the spindle oil content in the permeate showed to be much lower than for the untreated fluorosilicone membrane (viz. 2.5 compared to 5.5 %w). For bright stock the reduction in oil concentration was even higher (respectively 0.1 compared to 0.45 %w, both initial concentrations without any time effects).

For the preparation of larger fluorosilicone membranes known techniques e.g. a spraying technique can be used. In order to prevent penetration of the polymer into the pores of the support layer the sample is first prereacted to increase its molecular weight. This is done in a thermostatic controlled reaction vessel with a viscosity meter used as stirrer/controller. Water saturated air passes over the prepolymer solution to initiate the reaction and then scrubbed in a sodiumhydroxide solution in order to remove acetic acid which is formed during the reaction. After the prereaction the sample is diluted to a 1.5 %w solution with methylacetate. Samples up to 3 $m^2$ have been prepared in this manner.

As support material for the plasma experiments membranes made of polypropene with a 2-3 m sprayed fluorosilicone layer on top can be advantageously used. The plasma experiments can be performed advantageously at pressures below 200 Pa depending on the type of reactor employed in the process with either pure argon or an argon/hydrocarbon mixture such as argon/toluene at a ratio of 2:1 to 11.5:1, advantageously 4:1. Also other gases can be added. For example, an argon/toluene/freon mixture be used.

Experiments with supported membranes have been carried out with argon and argon/toluene in a

plasma reactor. Such a plasma reactor is known as such to those skilled in the art and will therefore not be described in detail.

Fluorosilicone membranes with a porous support layer for solvent recovery have been prepared and a plasma treatment of these membranes has been carried out.

The results of the experiments are given below in tables A and B.

In the tables the term P299 means plasma experiment 299 on a fluorosilicone supported from batch 164. The other terms have similar meanings.

TABLE A

SOLVENT RECOVERY EXPERIMENTAL RESULTS FOR PLASMA TREATED MEMBRANES WITH SPINDLE OIL/SOLVENT AS FEED MIXTURE

| exp. time (days) | temp °C | pressure bar | flow l/h | feed %w MEK | feed %w TOL | feed %w OIL |
|---|---|---|---|---|---|---|
| P212 - 10 min argon plasma on FG001: | | | | | | |
| 0 | 25 | 40 | 166 | 43.1 | 43.0 | 13.9 |
| 0 | 25 | 40 | 166 | 33.4 | 33.7 | 32.9 |
| 1 | 25 | 40 | 166 | 33.3 | 33.5 | 33.2 |
| 1 | 25 | 40 | 166 | 42.3 | 42.3 | 15.4 |

| permeate %w MEK | permeate %w TOL | permeate %w OIL | flux ($l/m^2$ day) | selectivity MEK/TOL | selectivity SOL/OIL |
|---|---|---|---|---|---|
| P212 - 10 min argon plasma on FG001: | | | | | |
| 53.5 | 45.6 | 0.97 | 290 | 1.17 | 16 |
| 55.2 | 42.3 | 2.44 | 270 | 1.32 | 20 |
| 55.4 | 42.1 | 2.49 | 268 | 1.32 | 19 |
| 53.7 | 45.0 | 1.24 | 414 | 1.19 | 14 |

TABLE A (cont'd)

| exp. time (days) | temp °C | pressure bar | flow l/h | feed %w MEK | feed %w TOL | feed %w OIL |
|---|---|---|---|---|---|---|
| P299 - 30 min argon plasma on FG164: | | | | | | |
| 0 | 25 | 40 | 70 | 37.1 | 42.7 | 20.3 |
| 1 | 25 | 40 | 58 | 29.2 | 32.7 | 38.1 |
| 2 | 25 | 40 | 200 | 30.2 | 24.6 | 45.3 |
| 6 | 25 | 40 | 100 | 37.2 | 37.8 | 24.9 |
| 7 | 25 | 40 | 80 | 33.9 | 34.5 | 31.6 |
| 8 | 25 | 40 | 89 | 30.3 | 32.2 | 37.5 |

| permeate %w MEK | permeate %w TOL | permeate %w OIL | flux ($l/m^2$ day) | selectivity MEK/TOL | selectivity SOL/OIL |
|---|---|---|---|---|---|
| P299 - 30 min argon plasma on FG164: | | | | | |
| 51.3 | 48.2 | 0.50 | 395 | 1.22 | 51 |
| 54.4 | 44.5 | 1.08 | 253 | 1.37 | 56 |
| 63.8 | 34.8 | 1.36 | 260 | 1.49 | 60 |
| 55.2 | 44.1 | 0.65 | 401 | 1.27 | 51 |
| 55.9 | 43.2 | 0.95 | 338 | 1.32 | 48 |
| 56.1 | 42.8 | 1.13 | 278 | 1.39 | 53 |

TABLE A (cont'd)

| exp. time (days) | temp °C | pressure bar | flow l/h | feed %w MEK | feed %w TOL | feed %w OIL |
|---|---|---|---|---|---|---|
| P304 - 4 min argon/toluene plasma on FG163: | | | | | | |
| 0 | 25 | 40 | 70 | 37.1 | 42.7 | 20.3 |
| 1 | 25 | 40 | 58 | 29.2 | 32.7 | 38.1 |
| 2 | 25 | 40 | 200 | 30.2 | 24.6 | 45.3 |
| 6 | 25 | 40 | 100 | 37.2 | 37.8 | 24.9 |
| 7 | 25 | 40 | 80 | 33.9 | 34.5 | 31.6 |
| 8 | 25 | 40 | 89 | 30.3 | 32.2 | 37.5 |

| permeate %w MEK | permeate %w TOL | permeate %w OIL | flux ($l/m^2$ day) | selectivity MEK/TOL | selectivity SOL/OIL |
|---|---|---|---|---|---|
| P304 - 4 min argon/toluene plasma on FG163: | | | | | |
| 52.9 | 46.9 | 0.27 | 231 | 1.30 | 94 |
| 55.4 | 43.7 | 0.90 | 182 | 1.42 | 68 |
| 64.5 | 34.4 | 1.11 | 208 | 1.53 | 74 |
| 56.3 | 42.8 | 0.86 | 306 | 1.34 | 38 |
| 57 | 42.1 | 0.92 | 283 | 1.38 | 50 |
| 57.2 | 41.8 | 0.98 | 245 | 1.45 | 61 |

TABLE A (cont'd)

| exp. time (days) | temp °C | pressure bar | flow l/h | feed %w MEK | feed %w TOL | feed %w OIL |
|---|---|---|---|---|---|---|
| P 328 - 2 min argon/toluene plasma on FG163: | | | | | | |
| 0 | 25 | 40 | 70 | 37.1 | 42.7 | 20.3 |
| 1 | 25 | 40 | 58 | 29.2 | 32.7 | 38.1 |
| 2 | 25 | 40 | 200 | 30.2 | 24.6 | 45.3 |
| 6 | 25 | 40 | 100 | 37.2 | 37.8 | 24.9 |
| 7 | 25 | 40 | 80 | 33.9 | 34.5 | 31.6 |
| 8 | 25 | 40 | 89 | 30.3 | 32.2 | 37.5 |

| permeate %w MEK | permeate %w TOL | permeate %w OIL | flux ($l/m^2$ day) | selectivity MEK/TOL | selectivity SOL/OIL |
|---|---|---|---|---|---|
| P 328 - 2 min argon/toluene plasma on FG163: | | | | | |
| 51.2 | 48.1 | 0.70 | 457 | 1.23 | 36 |
| 53.9 | 44.2 | 1.90 | 339 | 1.37 | 32 |
| 62.7 | 34.8 | 2.51 | 366 | 1.47 | 32 |
| 54.5 | 44.2 | 1.31 | 584 | 1.25 | 25 |
| 55.1 | 43.3 | 1.63 | 522 | 1.30 | 28 |
| 55.1 | 42.7 | 2.18 | 416 | 1.37 | 27 |

Equal effects of increased selectivity were found for bright stock/solvent separations (see Table B)

TABLE B

SOLVENT RECOVERY EXPERIMENTAL RESULTS
FOR PLASMA TREATED MEMBRANES WITH BRIGHT STOCK/SOLVENT
AS FEED MIXTURE

| | exp. time (days) | temp °C | pressure bar | flow l/h | feed %w MEK | feed %w TOL | feed %w OIL |
|---|---|---|---|---|---|---|---|
| FG164 | | | | | | | |
| | 0 | 25 | 40 | 220 | 33.4 | 33.3 | 33.3 |
| | 8 | 25 | 40 | 220 | 33.2 | 33.2 | 33.6 |
| | 36 | 25 | 40 | 220 | 33.6 | 33.9 | 32.4 |
| | 70 | 25 | 40 | 220 | 33.9 | 32.9 | 33.2 |
| | 93 | 25 | 40 | 220 | 33.1 | 33.8 | 33.1 |

| | permeate %w MEK | permeate %w TOL | permeate %w OIL | flux ($l/m^2$ day) | selectivity MEK/TOL | selectivity SOL/OIL |
|---|---|---|---|---|---|---|
| FG164 | | | | | | |
| | 54.2 | 45.1 | 0.72 | 672 | 1.20 | 69 |
| | 54.9 | 44.2 | 0.90 | 591 | 1.24 | 56 |
| | 54.5 | 44.6 | 0.96 | 740 | 1.23 | 49 |
| | 55.8 | 43.3 | 0.97 | 693 | 1.25 | 51 |
| | 53.3 | 45.8 | 0.94 | 711 | 1.19 | 52 |

TABLE B (cont'd)

| exp. time (days) | temp °C | pressure bar | flow l/h | feed %w MEK | feed %w TOL | feed %w OIL |
|---|---|---|---|---|---|---|
| P298 - 10 min argon plasma on FG164: | | | | | | |
| 0 | 25 | 40 | 220 | 33.4 | 33.3 | 33.3 |
| 8 | 25 | 40 | 220 | 33.2 | 33.2 | 33.6 |
| 36 | 25 | 40 | 220 | 33.6 | 33.9 | 32.4 |
| 70 | 25 | 40 | 220 | 33.9 | 32.9 | 33.2 |
| 93 | 25 | 40 | 220 | 33.1 | 33.8 | 33.1 |

| permeate %w MEK | permeate %w TOL | permeate %w OIL | flux ($l/m^2$ day) | selectivity MEK/TOL | selectivity SOL/OIL |
|---|---|---|---|---|---|
| P298 - 10 min argon plasma on FG164: | | | | | |
| 57.5 | 42.5 | 0.04 | 596 | 1.35 | 1161 |
| 55.6 | 44.3 | 0.10 | 529 | 1.26 | 527 |
| 56.2 | 43.6 | 0.12 | 660 | 1.30 | 399 |
| 56.9 | 42.9 | 0.13 | 624 | 1.29 | 382 |
| 54.2 | 45.6 | 0.13 | 624 | 1.21 | 372 |

TABLE B (cont'd)

| exp. time (days) | temp °C | pressure bar | flow l/h | feed %w MEK | feed %w TOL | feed %w OIL |
|---|---|---|---|---|---|---|
| P299 - 30 min argon plasma on FG164: | | | | | | |
| 0 | 25 | 40 | 220 | 33.4 | 33.3 | 33.3 |
| 8 | 25 | 40 | 220 | 33.2 | 33.2 | 33.6 |
| 36 | 25 | 40 | 220 | 33.6 | 33.9 | 32.4 |
| 70 | 25 | 40 | 220 | 33.9 | 32.9 | 33.2 |
| 93 | 25 | 40 | 220 | 33.1 | 33.8 | 33.1 |

| permeate %w MEK | permeate %w TOL | permeate %w OIL | flux ($l/m^2$ day) | selectivity MEK/TOL | selectivity SOL/OIL |
|---|---|---|---|---|---|
| P299 - 30 min argon plasma on FG164: | | | | | |
| 57.5 | 42.5 | 0.01 | 333 | 1.35 | 4160 |
| 55.1 | 44.9 | 0.04 | 321 | 1.23 | 1445 |
| 55.4 | 44.6 | 0.07 | 391 | 1.25 | 684 |
| 56.8 | 43.2 | 0.07 | 377 | 1.28 | 741 |
| 52.5 | 47.5 | 0.06 | 369 | 1.13 | 869 |

TABLE B (cont'd)

| | exp. time (days) | temp °C | pressure bar | flow 1/h | feed %w MEK | feed %w TOL | feed %w OIL |
|---|---|---|---|---|---|---|---|
| P301/3 - 10 min argon/toluene plasma on FG164/163: | | | | | | | |
| P301 | 12 | 25 | 40 | 220 | 33.3 | 33.3 | 33.3 |
| P303 | 8 | 25 | 40 | 220 | 33.3 | 33.3 | 33.3 |
| P304 - 4 min argon/toluene plasma on FG163: | | | | | | | |
| | 0 | 25 | 40 | 220 | 33.6 | 33.9 | 32.4 |
| | 34 | 25 | 40 | 220 | 33.9 | 32.9 | 33.2 |
| | 57 | 25 | 40 | 220 | 33.1 | 33.8 | 33.1 |

| | permeate %w MEK | permeate %w TOL | permeate %w OIL | flux ($l/m^2$ day) | selectivity MEK/TOL | selectivity SOL/OIL |
|---|---|---|---|---|---|---|
| P301/3 - 10 min argon/toluene plasma on FG164/163: | | | | | | |
| P301 | -- | -- | -- | <5 | -- | -- |
| P303 | -- | -- | -- | <5 | -- | -- |
| P304 - 4 min argon/toluene plasma on FG163: | | | | | | |
| | 57.8 | 42.2 | 0.02 | 122 | 1.38 | 2662 |
| | 59.4 | 40.6 | 0.01 | 177 | 1.42 | 5522 |
| | 53.1 | 46.9 | 0.01 | 192 | 1.16 | 5507 |

It will be appreciated that polypropene is an advantageous supporting layer. However, other suitable supporting layers can be applied, e.g. polyimide and polyamide. It will further be appreciated that advantageously the plasma treatment is 0.5-30 minutes.

Various modifications of the invention will become apparent to those skilled in the art from the foregoing description and accompanying drawings.

Such modifications are intended to fall within the scope of the appended claims.

## Claims

1. A process for the separation of solvents from hydrocarbons dissolved in said solvents wherein a feed solution comprising hydrocarbons dissolved in an aromatic solvent and a polar aliphatic solvent is contacted at elevated pressure with one side of a dense, supported membrane heated with a low temperature, low pressure plasma phase which is substantially impermeable to said hydrocarbons and which membrane comprises a dense, selective layer of a fluorosilicone compound and a porous supporting layer, and said solvents are recovered from the other side of the said plasma treated membrane.

2. The process as claimed in claim 1 wherein the plasma treatment is carried out with argon.

3. The process as claimed in claim 2 wherein the plasma treatment is carried out with an argon/hydrocarbon mixture, for example argon/toluene or argon/toluene/freon.

4. The process as claimed in claims 2 or 3 wherein the plasma treatment is 0.5-30 minutes.

5. The process as claimed in claims 2-4 wherein the pressures are below 200 Pa.

6. The process as claimed in any one of claims 3-5 wherein the argon/toluene ratio is 2:1 to 11.5:1.

7. The process as claimed in any one of claims 1-6 wherein the membrane comprises a 2-3 lm sprayed fluorosilicone layer on top.

8. A process for the separation of solvents from hydrocarbons dissolved in said solvent substantially as described hereinbefore with reference to the Example.

9. A supported plasma treated membrane suitable for use in a process as claimed in any one of the preceding claims which membrane comprises a dense, selective layer of a fluoro-silicone compound and a porous supporting layer.

European Patent Office

# EUROPEAN SEARCH REPORT

Application Number

EP 90 20 2923

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 333 284 (SHELL INT. RESEARCH MIJ.) * Abstract; claims 1,4,5,8-11; column 4, line 15 - column 5, line 37 * --- | 9 | B 01 D 61/00<br>B 01 D 71/70<br>B 01 D 69/12<br>C 10 G 31/11 |
| A | | 1-8 | |
| D,Y | EP-A-0 220 753 (SHELL INT. RESEARCH MIJ.) * Abstract; claims 1-5,7,8,14,18; column 2, line 33 - column 3, line 29; column 4, lines 8-14; example 1 * --- | 1-9 | |
| Y | EP-A-0 334 453 (SHELL INT. RESEARCH MIJ.) * Abstract; claims 1,5-13; page 3, lines 23-28,50-56; example * --- | 1-9 | |
| X | EP-A-0 092 417 (SUMITOMO ELECTR. IND. LTD) * Abstract; claims 1,5,8,10,13,14; page 5, line 18 - page 7, line 9; page 8, lines 6-23 * --- | 9 | |
| A | | 1,7 | |
| A | JOURNAL OF MEMBRANE SCIENCE, vol. 46, no. 1, September 1989, pages 1-28, Amsterdam, NL; P.W. KRAMER et al.: "Low temperature plasma for the preparation of separation membranes" * Summary; page 5, last paragraph; page 7, lines 1-19 * ----- | 1,2,4 | TECHNICAL FIELDS SEARCHED (Int. Cl.5)<br>B 01 D<br>C 10 G |

The present search report has been drawn up for all claims

| Place of search | Date of completion of search | Examiner |
|---|---|---|
| The Hague | 18 December 90 | HOORNAERT P.G.R.J. |

CATEGORY OF CITED DOCUMENTS

X: particularly relevant if taken alone
Y: particularly relevant if combined with another document of the same catagory
A: technological background
O: non-written disclosure
P: intermediate document
T: theory or principle underlying the invention

E: earlier patent document, but published on, or after the filing date
D: document cited in the application
L: document cited for other reasons

&: member of the same patent family, corresponding document